(19) Europäisches Patentamt
European Patent Office
Office européen des brevets

(11) **EP 2 466 489 A1**

(12) **EUROPEAN PATENT APPLICATION**

(43) Date of publication:
**20.06.2012 Bulletin 2012/25**

(51) Int Cl.:
***G06F 17/28*** *(2006.01)*

(21) Application number: **11193828.8**

(22) Date of filing: **15.12.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.12.2010 US 201013424608
19.04.2011 US 201113090244**

(71) Applicant: **Google Inc.**
**Mountain View, CA 94043 (US)**

(72) Inventor: **DeNero, John**
**Sunnyvale, CA California 94086 (US)**

(74) Representative: **Engdahl, Stefan**
**AWAPATENT AB**
**P.O. Box 45086**
**104 30 Stockholm (SE)**

(54) **Combining model-based aligners**

(57)    Method, computer storage medium encoded with a computer program and system for aligning words in parallel translation sentences for use in machine translation. Data characterising two directional alignment models for a pair of sentences is used to derive a combined bi-directional alignment model. Dual decomposition may be employed as an approximate inference technique.

EP 2 466 489 A1

**Description**

FIELD OF THE INVENTION

The invention relates to the field of machine translations, and specifically to methods, systems, and apparatus, including computer programs encoded on computer storage media, for word alignment for use in machine translation.

BACKGROUND

This specification relates to word alignment for statistical machine translation.

Word alignment is a central machine learning task in statistical machine translation (MT) that identifies corresponding words in sentence pairs. The vast majority of MT systems employ a directional Markov alignment model that aligns the words of a sentence **f** to those of its translation **e**.

Unsupervised word alignment is most often modeled as a Markov process that generates a sentence **f** conditioned on its translation **e**. A similar model generating **e** from **f** will make different alignment predictions.

Systems typically combine the predictions of two directional models, one which aligns **f** to **e** and the other **e** to **f**. Statistical machine translation systems combine the predictions of two directional models. Combination can reduce errors and relax the one-to-many structural restrictions of directional models. The most common combination methods are simply to form a union or intersection of alignments, or to apply a heuristic procedure like *grow-diag-final* (described in, for example, Franz Josef Och, Christopher Tillman, and Hermann Ney, Improved alignment models for statistical machine translation, in Proceedings of the Conference on Empirical Methods in Natural Language Processing, 1999).

SUMMARY

This specification describes the construction and use of a graphical model that explicitly combines two directional aligners into a single joint model. Inference can be performed through dual decomposition, which reuses the efficient inference algorithms of the directional models. The combined model enforces a one-to-one phrase constraint and improves alignment quality.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 illustrates the graph structure of a bidirectional graphical model for a simple sentence pair in English and Chinese.
FIG. 2 illustrates how the bidirectional model decomposes into two acyclic models.
FIG. 3 illustrates how the tree-structured subgraph $G_a$ can be mapped to an equivalent chain-structured model by optimizing.
FIG. 4 illustrates the place of the bidirectional model in a machine translation system.
Like reference symbols in the various drawings indicate like elements.

DETAILED DESCRIPTION

Introduction

This specification describes a model-based alternative to aligner combination that resolves the conflicting predictions of two directional alignment models by embedding them in a larger graphical model (the "bidirectional model").

The latent variables in the bidirectional model are a proper superset of the latent variables in two directional Markov alignment models. The model structure and potentials allow the two directional models to disagree, but reward agreement. Moreover, the bidirectional model enforces a one-to-one phrase alignment structure that yields the same structural benefits shown in phrase alignment models, synchronous ITG (Inversion Transduction Grammar) models, and state-of-the-art supervised models.

Inference in the bidirectional model is not tractable because of numerous edge cycles in the model graph. However, one can employ dual decomposition as an approximate inference technique. One can iteratively apply the same efficient sequence algorithms for the underlying Markov alignment models to search the combined model space.

In cases where this approximation converges, one has a certificate of optimality under the full model.

This model-based approach to aligner combination yields improvements in alignment quality and phrase extraction quality.

**Model Definition**

The bidirectional model is a graphical model defined by a vertex set $V$ and an edge set $D$ that is constructed conditioned on the length of a sentence $\mathbf{e}$ and its translation $\mathbf{f}$. Each vertex corresponds to a model variable $V_i$ and each undirected edge corresponds to a pair of variables $(V_i, V_j)$. Each vertex has an associated vertex potential function $v_i$ $(v_i)$ that assigns a real-valued potential to each possible value $v_i$ of $V_i$. Likewise, each edge has an associated potential function $\mu_{ij}(v_i, v_j)$ that scores pairs of values. The probability under the model of any full assignment $\mathbf{v}$ to the model variables, indexed by $V$, factors over vertex and edge potentials.

$$P(v) \propto \prod_{v_i \in V} v_i(v_i) \cdot \prod_{(v_i, v_j) \in D} \mu_{ij}(v_i, v_j) \qquad (1)$$

The bidirectional model contains two directional hidden Markov alignment models, along with an additional structure that resolves the predictions of these embedded models into a single symmetric word alignment. The following paragraphs describe the directional model and then describe the additional structure that combines two directional models into the joint bidirectional model.

**Hidden Markov Alignment Model**

This section describes the classic hidden Markov alignment model, which is described, for example, in Stephan Vogel, Hermann Ney, and Christoph Tillmann, HMM-Based Word, Alignment in Statistical Translation, in Proceedings of the 16th Conference on Computational Linguistics, 1996. The model generates a sequence of words $\mathbf{f}$ conditioned on a word sequence $\mathbf{e}$. One conventionally indexes the words of $\mathbf{e}$ by $i$ and $\mathbf{f}$ by $j$. P($\mathbf{f}|\mathbf{e}$) is defined in terms of a latent alignment vector $\mathbf{a}$, where $a_j = i$ indicates that word position $i$ of $\mathbf{e}$ aligns to word position $j$ of $\mathbf{f}$.

$$P(f|e) = \sum_a P(f, a|e)$$
$$P(f, a|e) = \prod_{j=1}^{|f|} D(a_j|a_{j-1}) M(f_j|e_{a_j}) \qquad (2)$$

In Equation 2 above, the emission model $\mathbf{M}$ is a learned multinomial distribution over word types. The transition model $\mathbf{D}$ is a multinomial over transition distances, which treats null alignments as a special case.

$$D(a_j = 0|a_{j-1} = i) = p_o$$

$$D(a_j = i' \neq 0|a_{j-1} = i) = (1 - p_o) \cdot c(i' - i),$$

where $c(i'- i)$ is a learned distribution over signed distances, normalized over the possible transitions from $i$.

The parameters of the conditional multinomial M, the transition model $c$, and the null transition parameter $p_o$ can all be learned from a sentence aligned corpus via the expectation maximization algorithm.

The highest probability word alignment vector under the model for a given sentence pair ($\mathbf{e}, \mathbf{f}$) can be computed exactly using the standard Viterbi algorithm for hidden Markov models in $O(|\mathbf{e}|^2 \cdot |\mathbf{f}|)$ time.

An alignment vector a can be converted trivially into a set of word alignment links $A$:

$$A_a = \{(i, j) : a_j = i, \, i \neq 0\}.$$

A set $A$ constructed in this way will always be many-to-one; many positions $j$ can align to the same $i$, but each $j$ appears at most once in the set.

The foregoing description has defined a directional model that generates **f** from **e**. An identically structured model can be defined that generates **e** from **f**. Let **b** be a vector of alignments where $b_i = j$ indicates that word position $j$ of $f$ aligns to word position $i$ of **e**. Then, P(**e**, **b**|**f**) is defined similarly to Equation 2, but with **e** and **f** swapped. The transition and emission distributions of the two models are distinguished by subscripts that indicate the generative direction of the model, f→e or e→f

$$P(e, b|f) = \prod_{j=1}^{|e|} D_{f \to e}\left(b_i | b_{i-1}\right) M_{f \to e}\left(e_i | f_{b_i}\right)$$

The vector **b** can be interpreted as a set of alignment links that is one-to-many: each value $i$ appears at most once in the set.

$$A_b = \{(i, j) : b_i = j, \, j \neq 0\}.$$

**A Model of Aligner Combination**

As will be described, one can combine aligners to create a bidirectional model by embedding the aligners in a graphical model that includes all of the random variables of two directional aligners and additional structure that promotes agreement and resolves their discrepancies.

The bidirectional model includes observed word sequences **e** and **f**, along with the two vectors of alignment variables **a** and **b** defined above.

Because the word types and lengths of e and **f** are always fixed by the observed sentence pair, one can define an identical model with only **a** and **b** variables, where the edge potentials between any $a_j$, $f_j$, and **e** are compiled into a vertex potential on $a_j$, defined in terms of **f** and **e**, and likewise for any $b_i$.

$$v_j^{(a)}(i) = M_{e \to f}\left(f_j | e_i\right) \tag{3}$$

$$v_i^{(b)}(j) = M_{f \to e}\left(e_i | f_j\right) \tag{4}$$

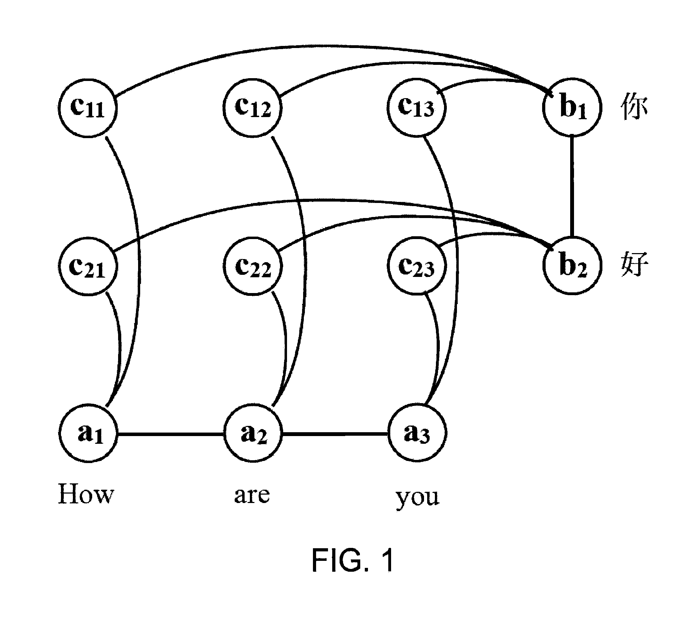

FIG. 1 illustrates the graph structure of a bidirectional graphical model for a simple sentence pair in English and Chinese. The variables **a**, **b**, and **c** (which is described below) are shown as labels on the figure.

The edge potentials between **a** and **b** encode the transition model in Equation 2.

$$\mu_{j-1,j}^{(a)}(i, i') = D_{e \to f}\left(a_j = i' | a_{j-1} = i\right) \tag{5}$$

$$\mu_{i-1,i}^{(b)}(j, j') = D_{f \to e}\left(b_i = j' | b_{i-1} = j\right) \tag{6}$$

In addition, a random bit matrix c encodes the output of the combined aligners:

$$c \in \{0,1\}^{|e| \times |f|}$$

Each random variable $c_{ij} \in \{0,1\}$ is connected to $a_j$ and $b_i$. These *coherence edges* connect the alignment variables of the directional models to the Boolean variables of the combined space. These edges allow the model to ensure that the three sets of variables, **a**, **b**, and **c**, together encode a coherent alignment analysis of the sentence pair. Figure 1 depicts the graph structure of the model.

**Coherence Potentials**

The potentials on coherence edges are not learned and do not express any patterns in the dataset. Instead, they are fixed functions that promote consistency between the integer-valued directional variables **a** and **b** and the Boolean-valued combination variables **c**.

Consider the variable assignment $a_j = i$, where $i = 0$ indicates that $f_j$ is null-aligned and $i > 0$ indicates that $f_j$ aligns to $e_i$. The coherence potential ensures the following relationship between the variable assignment $aj = i$ and the variables $c_{i'j}$, for any $i'$: $0 < i' \leq |\mathbf{e}|$.

- If $i = 0$ (null-aligned), then all $c_{i'j} = 0$.
- If $i > 0$, then $c_{ij} = 1$
- $c_{i'j} > 0$ only if $i' \in \{i - 1, i, i + 1\}$
- Assigning $c_{i'j} = 1$ for $i' \neq i$ incurs a cost $e^{-\alpha}$, where $\alpha$ is a learned constant, e.g., 0.3.

This pattern of effects can be encoded in a potential function $\mu^{(c)}$ for each edge. Each of these edge potential functions takes an integer value $i$ for some variable $a_j$ and a binary value $k$ for some $c_{i'j}$.

$$\mu^{(c)}_{(a_j, c_{i'j})}(i, k) = \begin{cases} 1 & i = 0 \wedge k = 0 \\ 0 & i = 0 \wedge k = 1 \\ 1 & i = i' \wedge k = 1 \\ 0 & i = i' \wedge k = 0 \\ 1 & i \neq i' \wedge k = 0 \\ e^{-\alpha} & |i - i'| = 1 \wedge k = 1 \\ 0 & |i - i'| > 1 \wedge k = 1 \end{cases} \qquad (7)$$

The potential $\mu^{(c)}_{(b_i, c_{ij'})}(j, k)$ for an edge between **b** and **c** is defined similarly.

**Model Properties**

The matrix **c** is interpreted as the final alignment produced by the bidirectional model, ignoring **a** and **b**. In this way, the one-to-many constraints of the directional models are relaxed. However, all of the information about how words align is expressed by the vertex and edge potentials on **a** and **b**. The coherence edges and the link matrix **c** only serve to resolve conflicts between the directional models and communicate information between them.

Because directional alignments are preserved intact as components of the bidirectional model, extensions or refinements to the underlying directional Markov alignment model can be integrated cleanly into the bidirectional model as well, including lexicalized transition models (described in, for example, Xiaodong He, Using word-dependent transition models in HMM based word alignment for statistical machine, in ACL Workshop on Statistical Machine Translation, 2007), extended conditioning contexts (described in, for example, Jamie Brunning, Adria de Gispert, and William Byrne, Context-dependent alignment models for statistical machine translation, in Proceedings of the North American Chapter of the Association for Computational Linguistics, 2009), and external information (described in, for example, Hiroyuki Shindo, Akinori Fujino, and Masaaki Nagata, Word alignment with synonym regularization, in Proceedings of the Association for Computational Linguistics, 2010).

For any assignment to (**a**, **b**, **c**) with non-zero probability, **c** must encode a one-to-one phrase alignment with a maximum phrase length of 3. That is, any word in either sentence can align to at most three words in the opposite sentence, and those words must be contiguous. This restriction is directly enforced by the edge potential in Equation 7.

**Model Inference**

In general, graphical models admit efficient, exact inference algorithms if they do not contain cycles. Unfortunately, the bidirectional model contains numerous cycles. For every pair of indices $(i, j)$ and $(i', j')$, the following cycle exists in the graph:

$$c_{ij} \rightarrow b_i \rightarrow c_{ij'} \rightarrow a_{j'} \rightarrow c_{i'j'} \rightarrow b_{i'} \rightarrow c_{i'j} \rightarrow a_j \rightarrow c_{ij}$$

Additional cycles also exist in the graph through the edges between $a_{j-1}$ and $a_j$ and between $b_{i-1}$ and $b_i$.

Because of the edge potential function that has been selected, which restricts the space of non-zero probability assignments to phrase alignments, inference in the bidirectional model is an instance of the general phrase alignment problem, which is known to be NP-hard.

**Dual Decomposition**

While the entire graphical model has loops, there are two overlapping subgraphs that are cycle-free. One subgraph $G_a$ includes all of the vertices corresponding to variables **a** and **c**. The other subgraph $G_b$ includes vertices for variables **b** and **c**. Every edge in the graph belongs to exactly one of these two subgraphs.

The dual decomposition inference approach allows this subgraph structure to be exploited (see, for example, Alexander M. Rush, David Sontag, Michael Collins, and Tommi Jaakkola, On dual decomposition and linear programming relaxations for natural language processing, in Proceedings of the Conference on Empirical Methods in Natural Language Processing, 2010). In particular, one can iteratively apply exact inference to the subgraph problems, adjusting potentials of the subgraph problems to reflect the constraints of the full problem. The technique of dual decomposition has recently been shown to yield state-of-the-art performance in dependency parsing (see, for example, Terry Koo, Alexander M. Rush, Michael Collins, Tommi Jaakkola, and David Sontag, Dual decomposition for parsing with non-projective head automata, in Proceedings of the Conference on Empirical Methods in Natural Language Processing, 2010).

**Dual Problem Formulation**

To describe a dual decomposition inference procedure for the bidirectional model, the inference problem under the bidirectional graphical model is first restated in terms of the two overlapping subgraphs that admit tractable inference. Let $c^{(a)}$ be a copy of **c** associated with $G_a$, and $c^{(b)}$ with $G_b$. Also, let $f(\mathbf{a}, c^{(a)})$ be the log-likelihood of an assignment to $G_a$ and let $g(\mathbf{b}, c^{(b)})$ be the log-likelihood of an assignment to $G_b$. Finally, let $I$ be the index set of all $(i, j)$ for **c**. Then, the maximum likelihood assignment to the bidirectional model can be found by optimizing

$$\max_{\mathbf{a}, \mathbf{b}, c^{(a)}, c^{(b)}} f\left(\mathbf{a}, c^{(a)}\right) + g\left(\mathbf{b}, c^{(b)}\right) \tag{8}$$

*such that:*

$$c_{ij}^{(a)} = c_{ij}^{(b)} \forall (i, j) \in I .$$

The Lagrangian relaxation of this optimization problem is $L(\mathbf{a}, \mathbf{b}, c^{(a)}, c^{(b)}, \mathbf{u}) =$

$$f\left(\mathbf{a}, c^{(a)}\right) + g\left(\mathbf{b}, c^{(b)}\right) + \sum_{(i,j) \in I} u(i, j)\left(c_{i,j}^{(a)} - c_{i,j}^{(b)}\right) .$$

Hence, one can rewrite the original problem as

$$\max_{a,b,c^{(a)},c^{(b)}} \min_{u} L\!\left(a, b, c^{(a)}, c^{(b)}, u\right),$$

and one can form a dual problem that is an upper bound on the original optimization problem by swapping the order of min and max. In this case, the dual problem decomposes into two terms that are each local to an acyclic subgraph.

$$\min_{u}\left( \max_{a,c^{(a)}}\left[ f\!\left(a, c^{(a)}\right) + \sum_{i,j} u(i,j) c_{ij}^{(a)} \right] + \max_{b,c^{(b)}}\left[ g\!\left(b, c^{(b)}\right) - \sum_{i,j} u(i,j) c_{ij}^{(b)} \right] \right) \qquad (9)$$

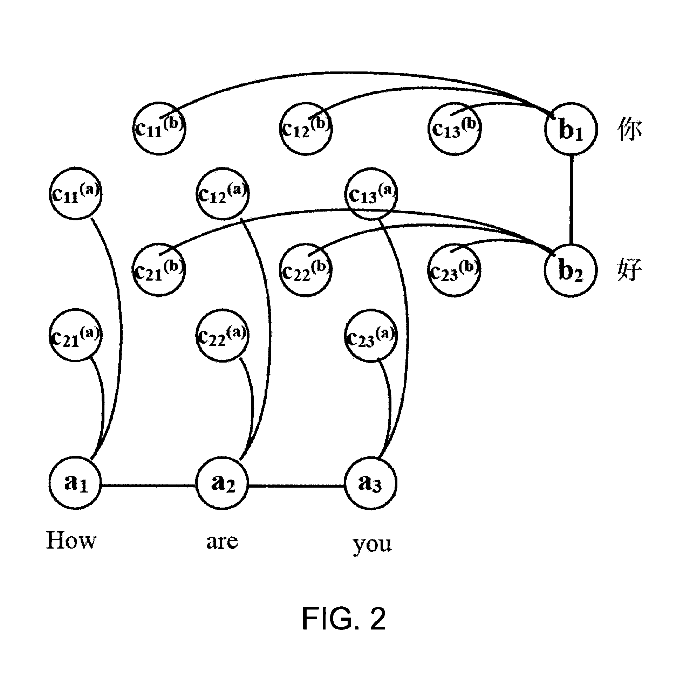

FIG. 2 illustrates how the bidirectional model decomposes into two acyclic models. The two models each contain a copy of **c**. The variables are shown as labels on the figure.

As in previous work, one solves for $u$ by repeatedly performing inference in the two decoupled maximization problems.

**Subgraph Inference**

Evaluating Equation 9 for fixed **u** requires only the Viterbi algorithm for linear chain graphical models. That is, one can employ the same algorithm that one would use to find the highest likelihood alignment in a standard HMM (Hidden Markov Model) aligner.

Consider the first part of Equation 9, which includes variables **a** and $\mathbf{c}^{(a)}$.

$$\max_{a,c^{(a)}}\left[ f\!\left(a, c^{(a)}\right) + \sum_{i,j} u(i,j) c_{ij}^{(a)} \right] \qquad (10)$$

In standard HMM aligner inference, the vertex potentials correspond to bilexical probabilities $P(f|e)$. Those terms are included in $f(\mathbf{a}, \mathbf{c}^{(a)})$.

The additional terms of the objective can also be factored into the vertex potentials of a linear chain model. If $a_j = i$, then $c_{ij} = 1$ according to the edge potential defined in Equation 7. Hence, setting $a_j = i$ adds the corresponding vertex potential $v_j^{(a)}(i)$ as well as $\exp(u(i,j))$ to Equation 10. For $i' \neq i$, either $c_{i'j} = 0$, which contributes nothing to Equation 10, or $c_{i'j} = 1$, which contributes $\exp(u(i',j) - \alpha)$, according to the edge potential between $a_j$ and $c_{i'j}$. Thus, one can capture the net effect of assigning $a_j$ and then optimally assigning all $c_{i'j}$ in a single potential $V_j(i) =$

$$v_j^{(a)}(i) + \exp\left[ u(i,j) + \sum_{j'\,:\,|j'-j|=1} \max\!\left(0, u(i,j') - \alpha\right) \right]$$

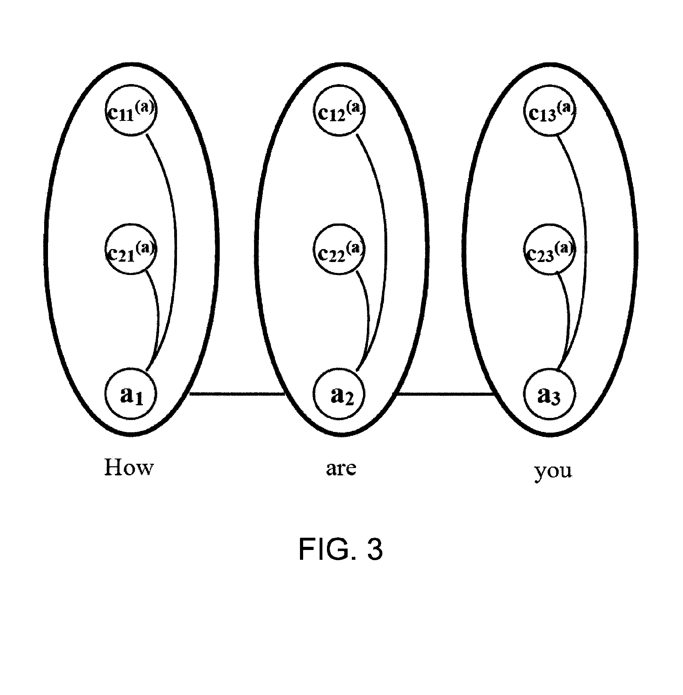

FIG. 3 illustrates how the tree-structured subgraph $G_a$ can be mapped to an equivalent chain-structured model by optimizing over $c_{ij}$ for $a_j = 1$.

Defining this potential allows one to collapse the source-side sub-graph inference problem defined by Equation 10 into a simple linear chain model that only includes potential functions $V_j$ and $\mu^{(a)}$. Hence, one can use a highly optimized linear chain inference implementation rather than a solver for general tree-structured graphical models. Figure 3 depicts this transformation.

An equivalent approach allows one to evaluate

$$\max_{b,c^{(b)}} \left[ g\left(b, c^{(b)}\right) + \sum_{i,j} u\left(i, j\right)c^{(b)}_{ij} \right] \qquad (11)$$

**Dual Decomposition Algorithm**

Having the ability to efficiently evaluate Equation 9 for fixed **u**, one can define the full dual decomposition algorithm for the bidirectional model, which searches for a **u** that optimizes Equation 9. One can, for example, iteratively search for such a **u** by sub-gradient descent. One can use a learning rate that decays with the number of iterations. Setting the initial learning rate to $\alpha$ works well in practice. The full dual decomposition optimization procedure is set forth below as Algorithm 1.

If Algorithm 1 converges, then it has found a u such that the value of $\mathbf{c}^{(a)}$ that optimizes Equation 10 is identical to the value of $\mathbf{c}^{(b)}$ that optimizes Equation 11. Hence, it is also a solution to the original optimization problem, namely Equation 8. Since the dual problem is an upper bound on the original problem, this solution must be optimal for Equation 8.

---

**Algorithm 1** Dual decomposition inference algorithm for the bidirectional model

---

**for** $t = 1$ to max iterations **do**

$\quad r \leftarrow \dfrac{\alpha}{t} \quad \triangleright$ *Learning rate*

---

$\quad \mathbf{c}^{(a)} \leftarrow \arg\max f(\mathbf{a}, \mathbf{c}^{(a)}) + \sum_{i,j} u(i, j)c^{(a)}_{ij}$

$\quad \mathbf{c}^{(b)} \leftarrow \arg\max g(\mathbf{b}, \mathbf{c}^{(b)}) - \sum_{i,j} u(i, j)c^{(b)}_{ij}$

$\quad$ **if** $\mathbf{c}^{(a)} = \mathbf{c}^{(b)}$ **then**

$\quad\quad$ **return** $\mathbf{c}^{(a)}$

$\quad \mathbf{u} \leftarrow \mathbf{u} + r\,(c^{(b)} - c^{(a)}) \qquad \triangleright$ *Dual update*

---

**Convergence and Early Stopping**

The dual decomposition algorithm provides an inference method that is exact upon convergence. (This certificate of optimality is not provided by other approximate inference algorithms, such as belief propagation, sampling, or simulated annealing.) When Algorithm 1 does not converge, the output of the algorithm can still be interpreted as an alignment. Given the value of u produced by the algorithm, one can find the optimal values of $\mathbf{c}^{(a)}$ and $\mathbf{c}^{(b)}$ from Equations 10 and 11 respectively. While these alignments may differ, they will likely be more similar than the alignments of completely independent aligners. These alignments will still need to be combined procedurally (e.g., taking their union), but because they are more similar, the importance of the combination procedure is reduced.

**Inference Properties**

Because a maximum number of iterations n was set in the dual decomposition algorithm, and each iteration only involves optimization in a sequence model, the entire inference procedure is only a constant multiple more computationally expensive than evaluating the original directional aligners.

Moreover, the value of **u** is specific to a sentence pair. Therefore, this approach does not require any additional communication overhead relative to the independent directional models in a distributed aligner implementation. Memory requirements are virtually identical to the baseline: only **u** must be stored for each sentence pair as it is being processed, but can then be immediately discarded once alignments are inferred.

Other approaches to generating one-to-one phrase alignments are generally more expensive. In particular, an ITG model requires $O(|e|^3 \cdot |f|^3)$ time, whereas Algorithm 1 requires only $O(n \cdot (|f| \, |e|^2 + |e| \, |f|^2))$.

**Machine Translation System Context**

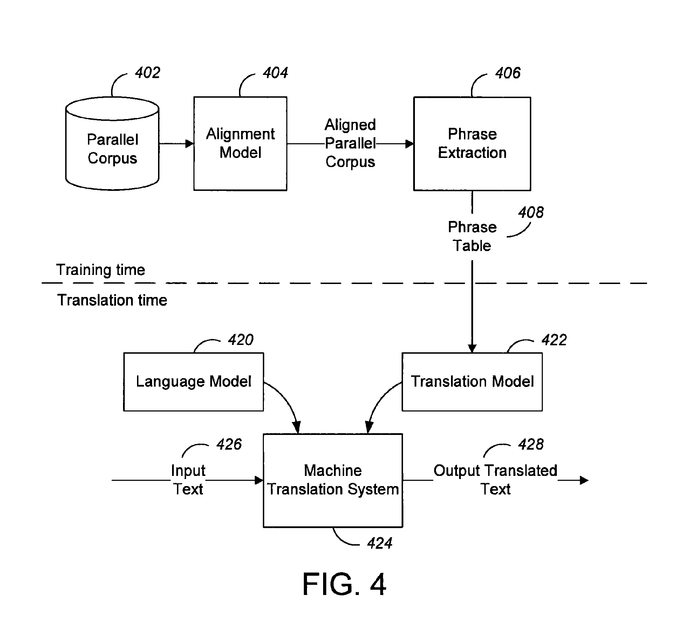

FIG. 4 illustrates the place of the bidirectional model in a machine translation system.

A machine translation system involves components that operate at training time and components that operate at translation time.

The training time components include a parallel corpus 402 of pairs of sentences in a pair of languages that are taken as having been correctly translated. Another training time component is the alignment model component 404, which receives pairs of sentences from the parallel corpus 402 and generates from them an aligned parallel corpus, which is received by a phrase extractor component 406. The bidirectional model is part of the alignment model component 404 and used to generate alignments between words in pairs of sentences, as described above. The phrase extractor produces a phrase table 408, i.e., a set of data that contains snippets of translated phrases and corresponding scores.

The translation time components include a translation model 422, which is generated from the data in the phrase table 408. The translation time components also include a language model 420 and a machine translation component 424, e.g., a statistical machine translation engine (a system of computers, data and software) that uses the language model 420 and the translation model 422 to generate translated output text 428 from input text 426.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible program carrier for execution by, or to control the operation of, data processing apparatus. Alternatively or in addition, the program instructions can be encoded on a propagated signal that is an artificially generated signal, e.g., a machine-generated electrical, optical, or electromagnetic signal, that is generated to encode information for transmission to suitable receiver apparatus for execution by a data processing apparatus. The computer storage medium can be a machine-readable storage device, a machine-readable storage substrate, a random or serial access memory device, or a combination of one or more of them.

The term "data processing apparatus" encompasses all kinds of apparatus, devices, and machines for processing data, including by way of example a programmable processor, a computer, or multiple processors or computers. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, or a combination of one or more of them.

A computer program (which may also be referred to as a program, software, software application, script, or code) can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application-specific integrated circuit).

Computers suitable for the execution of a computer program include, by way of example, can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

While this specification contains many specific implementation details, these should not be construed as limitations on the scope of any invention or of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes do not necessarily require the particular order shown, or sequential order, to achieve desirable results. In certain implementations, multitasking and parallel processing may be advantageous.

**Claims**

1. A method in one or more computers comprising:

   receiving, in one or more computers, data characterizing two directional alignment models for a pair of sentences, wherein one sentence of the pair is in a first language and the other sentence of the pair is in a different second language;
   deriving, in said one or more computers, a combined bidirectional alignment model from the two directional alignment models; and
   evaluating, in said one or more computers, the bidirectional alignment model and deriving an alignment for the pair of sentences from the evaluation of the bidirectional alignment model.

2. The method of claim 1, wherein:

   the bidirectional model embeds the two directional alignment models and an additional structure that resolves the predictions of the embedded models into a single symmetric word alignment.

3. The method of any one of claim 1 and claim 2, wherein:

   evaluating the bidirectional alignment model generates an alignment solution.

**4.** The method of any one of claim 1 and claim 2, wherein:

evaluating the bidirectional alignment model generates two alignment solutions, wherein the first solution is an alignment model in a first direction from the first language to the second language and the second solution is an alignment model in a second direction from the second language to the first language; and deriving the alignment for the pair of sentences comprises combining the first alignment model and the second alignment model.

**5.** The method of any one of claim 1 and claim 4 as dependent of claim 2, wherein:

each of the two directional alignment models are hidden Markov alignment models.

**6.** A computer storage medium encoded with a computer program, the program comprising instructions that, when executed by one or more computers, cause the one or more computers to perform operations comprising:

receiving data characterizing two directional alignment models for a pair of sentences, one sentence in a first language and the other sentence in a different second language; deriving a combined bidirectional alignment model from the two directional alignment models; and evaluating the bidirectional alignment model and deriving an alignment for the pair of sentences from the evaluation of the bidirectional alignment model.

**7.** The computer storage medium of claim 6, wherein the computer program further comprises instructions that, when executed by one or more computers, cause the one or more computers to perform operations comprising:

the bidirectional model embeds the two directional alignment models and an additional structure that resolves the predictions of the embedded models into a single symmetric word alignment.

**8.** The computer storage medium of any one of claim 6 and claim 7, wherein the computer program further comprises instructions that, when executed by one or more computers, cause the one or more computers to perform operations comprising:

evaluating the bidirectional alignment model generates an alignment solution.

**9.** The computer storage medium of any one of claim 6 and claim 7, wherein the computer program further comprises instructions that, when executed by one or more computers, cause the one or more computers to perform operations comprising:

evaluating the bidirectional alignment model generates two alignment solutions, wherein the first solution is an alignment model in a first direction from the first language to the second language and the second solution is an alignment model in a second direction from the second language to the first language; and deriving the alignment for the pair of sentences comprises combining the first alignment model and the second alignment model.

**10.** The computer storage medium of any one of claim 6 and claim 9 as dependent of claim 7, wherein the computer program further comprises instructions that, when executed by one or more computers, cause the one or more computers to perform operations comprising:

each of the two directional alignment models are hidden Markov alignment models.

**11.** A system comprising:

one or more computers and one or more storage devices storing instructions that are operable, when executed by the one or more computers, to cause the one or more computers to perform operations comprising:

receiving data characterizing two directional alignment models for a pair of sentences, one sentence in a first language and the other sentence in a different second language; deriving a combined bidirectional alignment model from the two directional alignment models; and

evaluating the bidirectional alignment model and deriving an alignment for the pair of sentences from the evaluation of the bidirectional alignment model.

**12.** The system of claim 11, wherein the one or more computers and one or more storage devices further stores instructions that are operable, when executed by the one or more computers, to cause the one or more computers to perform operations comprising:

the bidirectional model embeds the two directional alignment models and an additional structure that resolves the predictions of the embedded models into a single symmetric word alignment.

**13.** The system of any one of claim 11 and 12, wherein the one or more computers and one or more storage devices further stores instructions that are operable, when executed by the one or more computers, to cause the one or more computers to perform operations comprising:

evaluating the bidirectional alignment model generates an alignment solution.

**14.** The system of any one of claim 11 and 12, wherein the one or more computers and one or more storage devices further stores instructions that are operable, when executed by the one or more computers, to cause the one or more computers to perform operations comprising:

evaluating the bidirectional alignment model generates two alignment solutions,
wherein the first solution is an alignment model in a first direction from the first language to the second language and the second solution is an alignment model in a second direction from the second language to the first language; and
deriving the alignment for the pair of sentences comprises combining the first alignment model and the second alignment model.

**15.** The system of any one of claim 11 and claim 14 as dependent of claim 12, wherein the one or more computers and one or more storage devices further stores instructions that are operable, when executed by the one or more computers, to cause the one or more computers to perform operations comprising:

each of the two directional alignment models are hidden Markov alignment models.

FIG. 1

FIG. 2

FIG. 3

FIG. 4

# EP 2 466 489 A1

| | Europäisches Patentamt | EUROPEAN SEARCH REPORT | Application Number |
|---|---|---|---|
| | European Patent Office | | EP 11 19 3828 |
| | Office européen des brevets | | |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Percy Liang ET AL: "Alignment by agreement", Proceeding HLT-NAACL '06 Proceedings of the main conference on Human Language Technology Conference of the North American Chapter of the Association of Computational Linguistics, 4 June 2006 (2006-06-04), XP55024271, Stroudsburg, PA, USA Retrieved from the Internet: URL:http://www.cs.berkeley.edu/~pliang/papers/alignment-naacl2006.pdf [retrieved on 2012-04-11] * the whole document * ----- | 1-15 | INV. G06F17/28 |
| X | Kuzman Ganchev ET AL: "Better Alignments = Better Translations?", Reprinted from: Better Alignments = Better Translations? Kuzman Ganchev, Joao Graca and Ben Taskar. In Proceedings of the 46th Annual Meeting of the Association of Computational Linguistics, 16 June 2008 (2008-06-16), XP55024295, Columbus, Ohio, USA Retrieved from the Internet: URL:http://repository.upenn.edu/cgi/viewcontent.cgi?article=1042&context=grasp_papers [retrieved on 2012-04-12] * the whole document * ----- | 1-15 | TECHNICAL FIELDS SEARCHED (IPC) G06F |
| X | OCH F J ET AL: "Improved Statistical Alignment Models", PROCEEDINGS OF THE ANNUAL MEETING OF THE ACL, XX, XX, 2 October 2000 (2000-10-02), pages 440-447, XP002279144, * the whole document * ----- -/-- | 1-15 | |

The present search report has been drawn up for all claims

| Place of search | Date of completion of the search | Examiner |
|---|---|---|
| Berlin | 12 April 2012 | Woods, Justin |

EPO FORM 1503 03.82 (P04C01)

**EUROPEAN SEARCH REPORT**

Application Number

EP 11 19 3828

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/112573 A1 (HE XIAODONG [US]) 30 April 2009 (2009-04-30) <br><br> * abstract * <br> * paragraphs [0007] - [0014], [0040], [0071] - [0081] * <br> ----- | 1,3-6, 8-11, 13-15 | |
| X | Joao Graça ET AL: "Expectation maximization posterior constraints", Neural Information Processing Systems Conference (NIPS), 4 December 2007 (2007-12-04), XP55024313, Vancouver, BC, Canada Retrieved from the Internet: URL:http://citeseerx.ist.psu.edu/viewdoc/download?doi=10.1.1.69.4545&rep=rep1&type=pdf [retrieved on 2012-04-12] * abstract * * Sections 2, 2.1, 4, 4.1, 4.1.2, 6 * * figure 2 * ----- | 1-15 | |
| X | YONGGANG DENG ET AL: "Optimizing word alignment combination for phrase table training", PROCEEDINGS OF THE ACL-IJCNLP 2009 CONFERENCE SHORT PAPERS, 2 August 2009 (2009-08-02), pages 229-232, XP55024324, Stroudsburg, PA, USA * abstract * * Sections 1 & 2 * ----- <br><br> -/-- | 1-15 | TECHNICAL FIELDS SEARCHED (IPC) |

The present search report has been drawn up for all claims

| Place of search | Date of completion of the search | Examiner |
|---|---|---|
| Berlin | 12 April 2012 | Woods, Justin |

EPO FORM 1503 03.82 (P04C01)

**EP 2 466 489 A1**

Europäisches Patentamt
European Patent Office
Office européen des brevets

# EUROPEAN SEARCH REPORT

Application Number

EP 11 19 3828

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | JOHN DENERO ET AL: "Model-based aligner combination using dual decomposition", HLT '11 PROCEEDINGS OF THE 49TH ANNUAL MEETING OF THE ASSOCIATION FOR COMPUTATIONAL LINGUISTICS: HUMAN LANGUAGE TECHNOLOGIES, 19 June 2011 (2011-06-19), pages 420-429, XP55024146, Portland, Oregon, USA * the whole document * | 1-15 | |
| A | ALEXANDER M. RUSH; DAVID SONTAG; MICHAEL COLLINS; TOMMI JAAKKOLA: "On dual decomposition and linear programming relaxations for natural language processing", PROCEEDINGS OF THE CONFERENCE ON EMPIRICAL METHODS IN NATURAL LANGUAGE PROCESSING, 9 October 2010 (2010-10-09), XP055024305, * abstract * * Sections 1, 3, 4 & 6 * | 1-15 | |
| A | STEPHAN VOGEL; HERMANN NEY; CHRISTOPH TILLMANN: "HMM-Based Word Alignment in Statistical Translation", PROCEEDINGS OF THE 16TH CONFERENCE ON COMPUTATIONAL LINGUISTICS, 1996, pages 836-841, XP002673705, * the whole document * | 1-15 | |

TECHNICAL FIELDS SEARCHED (IPC)

The present search report has been drawn up for all claims

| Place of search | Date of completion of the search | Examiner |
|---|---|---|
| Berlin | 12 April 2012 | Woods, Justin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

19

## ANNEX TO THE EUROPEAN SEARCH REPORT
## ON EUROPEAN PATENT APPLICATION NO.

EP 11 19 3828

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2012

| Patent document cited in search report | Publication date | Patent family member(s) | Publication date |
|---|---|---|---|
| US 2009112573 A1 | 30-04-2009 | NONE | |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FRANZ JOSEF OCH ; CHRISTOPHER TILLMAN ; HERMANN NEY.** Improved alignment models for statistical machine translation. *Proceedings of the Conference on Empirical Methods in Natural Language Processing,* 1999
- **STEPHAN VOGEL ; HERMANN NEY ; CHRISTOPH TILLMANN ; HMM-BASED WORD.** Alignment in Statistical Translation. *Proceedings of the 16th Conference on Computational Linguistics,* 1996
- **XIAODONG HE.** Using word-dependent transition models in HMM based word alignment for statistical machine. *ACL Workshop on Statistical Machine Translation,* 2007
- **JAMIE BRUNNING ; ADRIA DE GISPERT ; WILLIAM BYRNE.** Context-dependent alignment models for statistical machine translation. *Proceedings of the North American Chapter of the Association for Computational Linguistics,* 2009
- **HIROYUKI SHINDO ; AKINORI FUJINO ; MASAAKI NAGATA.** Word alignment with synonym regularization. *Proceedings of the Association for Computational Linguistics,* 2010
- **ALEXANDER M. RUSH ; DAVID SONTAG ; MICHAEL COLLINS ; TOMMI JAAKKOLA.** On dual decomposition and linear programming relaxations for natural language processing. *Proceedings of the Conference on Empirical Methods in Natural Language Processing,* 2010
- **TERRY KOO ; ALEXANDER M. RUSH ; MICHAEL COLLINS ; TOMMI JAAKKOLA ; DAVID SONTAG.** Dual decomposition for parsing with non-projective head automata. *Proceedings of the Conference on Empirical Methods in Natural Language Processing,* 2010